# EUROPEAN PATENT SPECIFICATION

(11) **EP 0 583 115 B1**
(45) Date of publication and mention of the grant of the patent: **04.12.1996**
(21) Application number: 93306018.8
(22) Date of filing: 29.07.1993
(51) Int. Cl.: G02F 1/35

(54) **Nonlinear optical device**
Nichtlineare optische Vorrichtung
Dispositif optique non-linéaire

(30) Priority: 30.07.1992 JP 203497/92
(43) Date of publication of application: 16.02.1994
(73) Proprietor: International Business Machines Corporation, Armonk, N.Y. 10504 (US)
(72) Inventor: Owa, Soichi, Nerima-ku, Tokyo (JP); Kumata, Kiyoshi, Bunkyo-ku, Tokyo (JP); Kano, Satoru S., Yokohama-shi, Kanagawa-ken (JP)
(74) Representative: Moss, Robert Douglas

(56) References cited:
- SPIE VOL. 1361 - PHYSICAL CONCEPTS OF MATERIALS FOR NOVEL OPTOELECTRONIC DEVICE APPLICATIONS, October 1990 , AACHEN, DE pages 262 - 273 XP000238902 J.S. HARRIS ET AL. 'Quantum Wells and Artificially Structured Materials for Non-Linear Optics'
- PATENT ABSTRACTS OF JAPAN vol. 016, no. 143 (P-1335)9 April 1992 & JP-A-04 001 617 (NEC CORP) 7 January 1992
- ELECTRONICS LETTERS. vol. 25, no. 16 , August 1989 , STEVENAGE GB pages 1063 - 1065 XP000071918 E. ROSENCHER ET AL. 'Second Harmonic Generation by Intersub-Band Transitions in Compositionally Asymmetrical MQWs'
- PHYSICAL REVIEW LETTERS vol. 62, no. 9 , February 1989 , NEW YORK US pages 1041 - 1044 XP000122650 M.M. FEJER ET AL. 'Observation of Extremely Large Quadratic Susceptibility at 9.6-10.8 microns in Electric Field Biased AlGaAs Quantum Wells'

## Description

### Detailed Description of the Invention:

This invention relates to a nonlinear optical device used for wavelength conversion or modulation of input light. It also relates to a device that generates coherent light of short wavelengths by converting the wavelengths of fundamental light by utilizing nonlinear optical effect.

Semiconductor lasers are used in the field of opto-electronics in such areas as optical information processing, optical communication, laser processing, medical treatment, and optical measurement. Although GaAs lasers with wavelengths of 780 nm - 830 nm (near infrared) are most commonly used today, various areas of the optical industry are insistent that the wavelengths of coherent beams emitted by semiconductor lasers should be shorter. Research and development to discover a way of complying with this demand are therefore being promoted. For example, in the field of optical storage, shorter wavelengths are required in order to increase the storage density of an optical recording medium. For color display, blue is essential. In the field of laser printers, shorter wavelengths mean higher photon energy, which can make the relevant chemical reaction more efficient. Consequently, various attempts have been made to generate coherent blue light with wavelengths of 300 nm to 500 nm by combining a semiconductor laser that generates red or near-infrared light with wavelengths of 600 nm to 1000 nm, and a wavelength converter that converts the fundamental light wave emitted from a semiconductor laser into light with shorter wavelengths. Such a wavelength converter typically utilizes second-order optical nonlinearity (second-harmonic generation, or SHG; sum frequency generation; or difference frequency generation) in order to achieve conversion efficiency.

Examples of conventional wavelength converters include inorganic crystals such as KDP, ADP, and LiNbO₃. However, such materials do not possess sufficiently high nonlinearity, and a relatively large crystal is necessary to perform wavelength conversion at high efficiency, with the result that it is difficult to reduce the size of the device.

Other examples of wavelength converters include a multi-quantum-well structure; that is, a structure having a plurality of regions in which the gap between the minimum energy level for electrons of the conduction band and the maximum energy level for electrons of the valence band is lower than in the adjoining (barrier) regions. (1) M. M. Fejer, S. J. B. Yoo, R. L. Byer, A Harwit, and J. S. Harris, Jr., Phys. Rev. Lett. 62, 1041 (1989), and (2) E. Rosencher, P. Bois, J. Nagle, and S. DeLaitre, Electron. Lett., 25, 1063 (1989) have reported the results of experiments in which a multi-quantum-well structure consisting of a GaAs layer and a GaAlAs layer disposed on the substrate is used for converting infrared light (with a wavelength of 10.6 µm). These reports reveal that a multi-quantum-well structure (both the barrier layer and the well layer are made from a III-V compound) has high nonlinearity. However, there is a problem in that such a multi-quantum-well structure is not transparent to light with a wavelength shorter than infrared, or absorbs such light with the result that it cannot be used to shorten the wavelength of the coherent light emitted by the semiconductor laser, whereas transparency is required for visible light, including blue light, to generate blue light by a second-order optical effect.

Therefore, it is a first aspect of the present invention to provide a nonlinear optical device as defined in claim 1.

The present invention preferably provides a nonlinear optical device with sufficiently high nonlinearity, resulting from the asymmetric dependence of potential on position in a semiconductor layer, for efficient wavelength conversion or for optical modulation, for example.

The present invention preferably also provides a nonlinear optical device suitable for generation of blue light.

The invention may be implemented in an efficient and compact generator for coherent light with a short wavelength.

To attain an efficient wavelength converter, it is necessary to have a material with relatively large second-order nonlinear susceptibility χ⁽²⁾. In addition, the light absorption of this material should be low in two wavelength regions of near-infrared or red light (600 nm to 1000 nm), which is the fundamental light wave, and blue light (300 nm to 500 nm), to generate blue light through wavelength conversion.

To satisfy these requirements, a new multi-quantum-well structure is included in the material layers disposed on the substrate. An insulator (a I-VII or II-VII compound) is used as the material for the barrier layer, while a semiconductor (III-V or II-VI compound) is used as the material for the well layer.

The multi-quantum-well structure is a multilayer structure in which barrier layers are alternately laminated with well layers in which each well has a layer thickness of several nanometers to several tens of nanometers. However, the lattice structure of crystals should be continuous on the inside of the well layer and the barrier layer, as well as at the interface between both layers, with little dislocation (that is, it should form an epitaxial structure).

The multi-quantum-well structure is formed as at least a part of the material layers disposed on a substrate by the molecular beam epitaxy (MBE) process, the metal organic chemical vapor deposition (MOCVD) process, or the liquid phase epitaxy (LPE) process. It is essential to the growth of the crystal not to dislocate the lattice structure of the crystal in the barrier layer or the well layer, or at the interface between these layers, by controlling the temperature, growth rate, and so on (thus allowing epitaxial growth). The fact that hetero-epitaxial growth of an insulator and a semiconductor is possible was reported in (3) H. Ishiwara and T. Asano, Appl. Phys. Lett., 40, 66 (1982), and (4) T. Yokogawa, T. Saitoh, and T. Narusawa, Appl. Phys. Lett., 58, 1754 (1991). The structures disclosed therein are not quantum well structures.

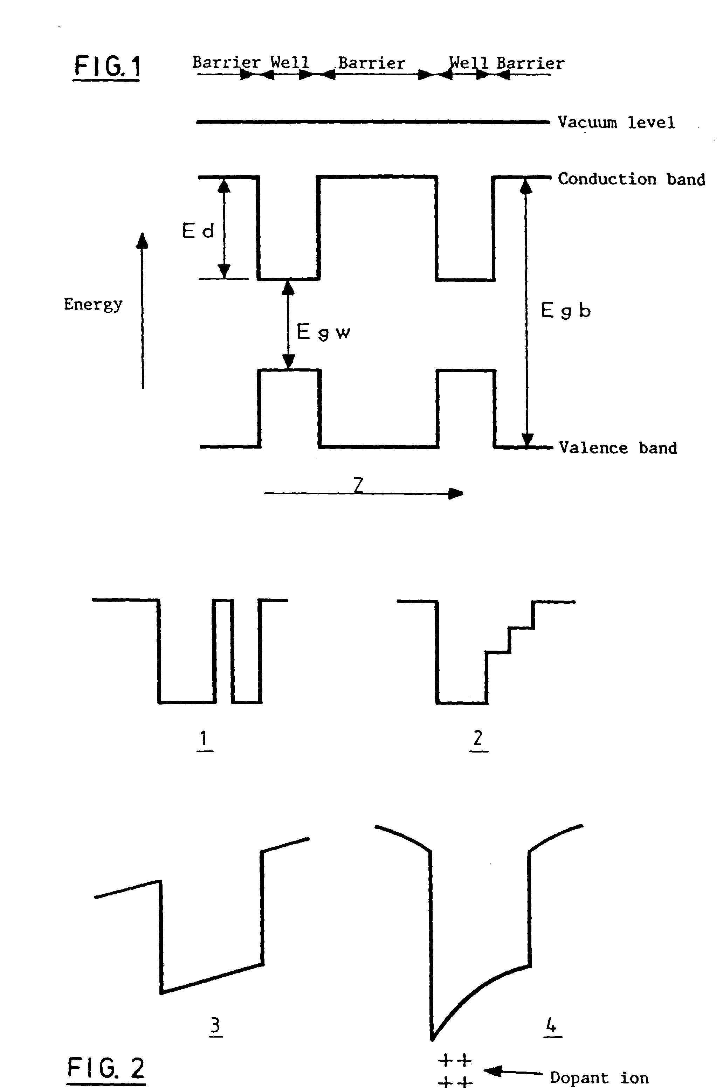

When the electronic structure of a material (which determines the potential for electrons in the material) is considered, the difference in energy level between a conduction band and a valence band is called a band-gap. In Figure 1 of the accompanying drawings, Egb is the band-gap of the barrier layer, and Egw is the band-gap of the well layer. The difference between the minimum conduction band energy levels of a well layer and an adjoining barrier layer is known as the well depth in the conduction band, whereas the difference between maximum valence band energy levels as between these layers is known as the well depth in the valence band. In the quantum well structure, a well of potential for free electrons is formed in the conduction band, while a well of potential for holes is formed in the valence band. Because electrons in the well of the conduction band affect the generation of blue light by a second-order nonlinear optical effect, the following discussion will focus on the behavior of only these electrons.

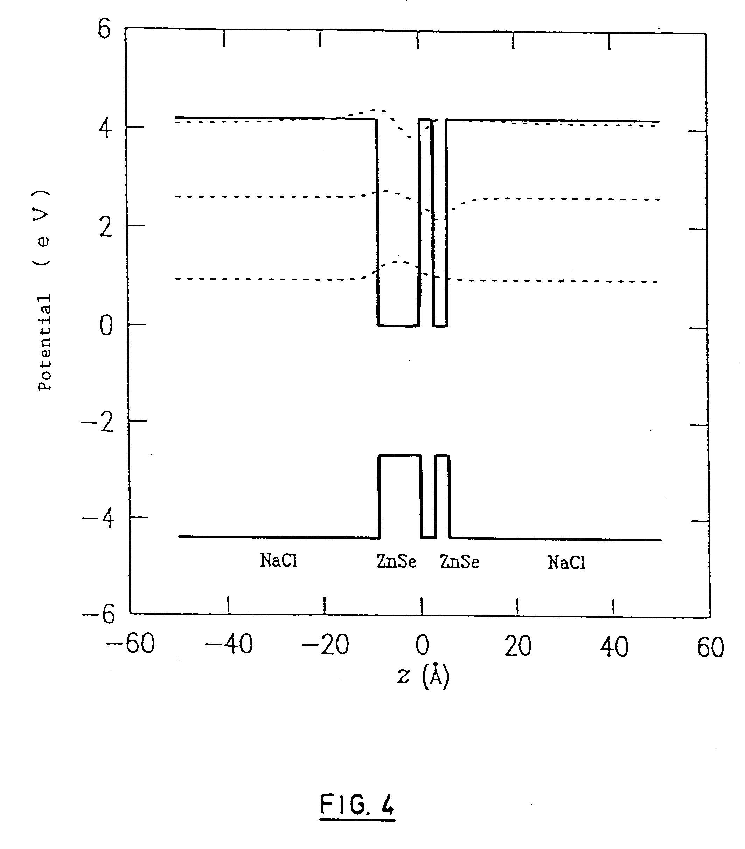

The well layer is doped with impurities, with the result that free electrons exist. The well has a characteristic relationship between energy-level and position which, when represented graphically, has a shape that is asymmetric in the direction of the thickness (that is, the direction normal to the surface of the substrate, hereinafter called the "z-direction"). This condition is required for second-order nonlinearity. The following are typical known methods for attaining it:
1) The well layers are formed as coupled quantum wells in which well layers are made of the same material, but separated by thin barrier layers (see Part 1 of Figure 2).
2) Each well layer is composed of two or more layers of different materials, and the depth of the well is changed stepwise (see Part 2 of Figure 2). Alternatively, a well layer is made up of a mixture of two or more materials, and the depth of the well is changed by altering the mixing ratio in the z-direction.
3) An external electric field is applied (see Part 3 of Figure 2).
4) Impurities are locally doped to generate an electric field internally (see Part 4 of Figure 4).

Electrons in the well are quantized so that their energy levels have discrete values and corresponding states (wave functions). The depth of potential is determined in such a manner that two or more of such different states exist in one well (three or more being better for high nonlinearity), and that the difference in energy level is at about the energy level of visible light (1.5 eV to 3 eV). To satisfy these requirements, it is necessary that the depth of the well Ed (see Figure 1) should be about 3 eV or more. A quantum well structure that uses an insulator layer as the barrier layer and a semiconductor layer as the well layer satisfies the requirements for the depth of the well.

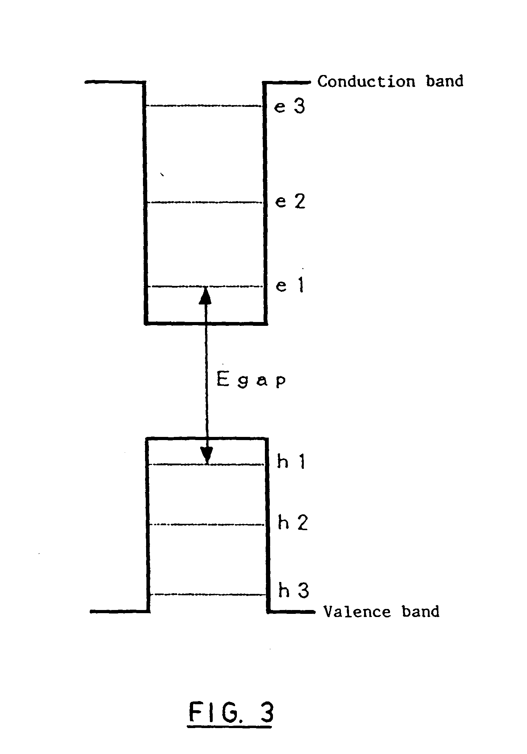

The state of the electrons in a well is called a sub-band. Figure 3 is a diagram schematically illustrating sub-bands. e1, e2, and e3 are sub-bands of the conduction layer, while h1, h2, and h3 are sub-bands of the valence layer. The wave function and the energy level for each sub-band, which depend on the width, depth, and shape of the well, affect the second-order nonlinearity and the absorption coefficient. Therefore, values such as the width of the well are determined by taking these factors into consideration when a well is actually designed.

If there are electrons in a well, they are excited by external light polarized in the z-direction, and move between the states in the well (inter-sub-band transitions) so as to exhibit a nonlinear optical response. Absorption of light is mainly caused by the transition of electrons from the valence band to the conduction band. To avoid this, it is sufficient that the energy difference Egap in the well layer between the maximum energy level of the valence band and the minimum energy level of the conduction layer should be larger than the energy of the light in question. In particular, to avoid absorption of visible light, it is sufficient that this energy difference should be about 3 eV or more. When a wide-band-gap semiconductor (a II-VI compound or one of several III-V compound semiconductors) is used for the well layer, this condition is satisfied. Although some absorption is caused by the inter-sub-band transition, it is small enough to be negligible.

No wavelength conversion is caused when the nonlinear optical device is used as an optical modulator. Therefore, it is possible to use a semiconductor with a rather narrow band-gap such as GaAs for the well layer.

Embodiments of this invention will be now be described and explained in more detail with reference to the accompanying figures in which:
Figure 1 is a diagram showing the characteristic energy levels of a multi-quantum-well electronic structure;
Figure 2 is a diagram showing examples of asymmetric potential characteristics in the well layer;
Figure 3 is a diagram showing sub-bands in the well layer;
Figure 4 is a diagram showing the potential characteristics due to the electronic structure of the well layer in an example multi-quantum-well structure according to the present invention;
Figure 5 is a graph showing the theoretical values of the second-order nonlinearity susceptibility χ⁽²⁾ of the multi-quantum-well structure, one unit of which is shown in Figure 4;
Figure 6 is a diagram showing the potential characteristics due to electronic structure of the well layer in another example multi-quantum-well structure according to the present invention;
Figure 7 is a graph showing the theoretical values of the second-order nonlinearity susceptibility χ⁽²⁾ of the multi-quantum-well structure, one unit of which is shown in Figure 6;
Figure 8 is a diagram showing a short-wavelength coherent light generator according to the present invention;
Figure 9 is a sectional view showing the structure of a coherent beam generator according to the present invention in detail;
Figure 10 shows an example nonlinear optical device for wavelength conversion according to the present invention; and
Figure 11 shows an example nonlinear optical device for light modulation according to the present invention.

First, the design of the multi-quantum-well structure is explained in detail. The materials used for the barrier layer are I-VII compounds such as LiBr, NaCl, or RbF (including mixtures of them), and II-VII compounds such as CaF₂ or SrF₂ (including mixtures of them), all of which are insulators. It may also be possible to use mixtures of I-VII compounds and II-VI compounds. The materials used for the well layer are II-VI compounds such as ZnSe or ZnS (including mixtures of them), and III-V compounds such as GaP or AlAs (including mixtures of them), all of which are semiconductors. The materials may also be mixtures of II-VI compounds and III-V compounds.

Figure 4 is a graph of the potential characteristic of a unit of a multi-quantum-well structure in which NaCl is used as the barrier layer and ZnSe is used as the well layer. An actual nonlinear optical device would include multiple repetition of the unit. The upper solid line indicates the potential for electrons in the conduction band. The corresponding potential in the valence band is indicated by the lower solid line. The well layer is an asymmetric coupled quantum well in which an NaCl layer with a thickness of 2.82 angstroms is sandwiched between two ZnSe layers with thicknesses of 8.50 angstroms and 2.83 angstroms. The band-gap of the barrier layer is 8.5 eV, while the well depth of the conduction layer is 4.2 eV.

The dotted lines show the three possible states (wave functions) of electrons confined in the well. The y-coordinates of the dotted lines indicate the energy levels in those states. They are 0.9 eV, 2.6 eV, and 4.1 eV measured from the bottom of the well. Optical nonlinearity is caused by the transition of electrons between the three states. The difference between the maximum energy level of the electrons in the valence band and the minimum energy level of the electrons in the conduction level is 3.6 eV, even in the ZnSe layer. Thus, low absorption at the visible light level is attained.

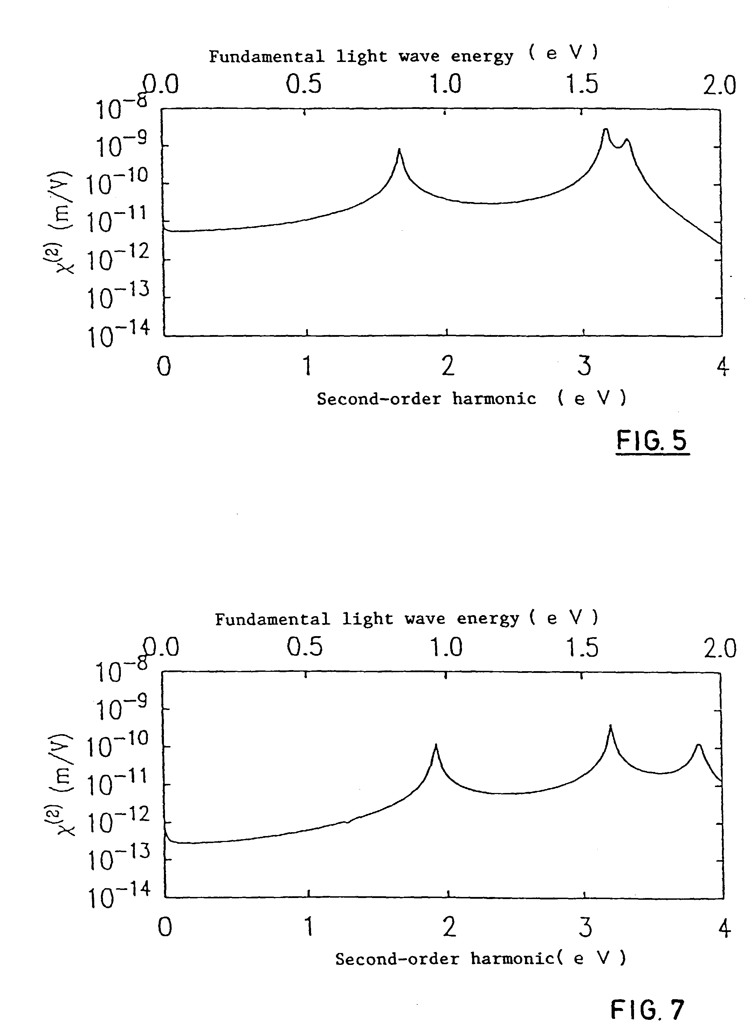

Figure 5 shows the theoretical value of the second-order nonlinearity susceptibility χ⁽²⁾ (the magnitude index of nonlinearity), which affects the generation of a second harmonic frequency wave for a multi-quantum-well structure, a unit of which is the coupled quantum well shown in Figure 4. Both the fundamental light wave and the second harmonic are polarized in the z-direction. The energy of the fundamental light wave being input is indicated on the upper abscissa, the energy of the second harmonic being generated is indicated on the lower abscissa, and χ⁽²⁾ is indicated on the ordinates. The light emitted from a GaAs laser has a wavelength of 830 nm, which corresponds to 1.5 eV on the upper abscissa. The value of χ⁽²⁾ is large enough, even if the fundamental light wave is near-infrared or red light, and its maximum value exceeds 10⁻⁹ m/V.

In this diagram, the calculation equation shown in reference (1) is used, and 2 x 10¹⁸/cm³ is assumed as the density of free electrons in the well, 10 as the value of local field correction, and 1/2 as the ratio to the entire volume of the quantum well structure in the well layer. See (5) Y. R. Shen, "The Principle of Nonlinear Optics," Wiley-Interscience, New York, (ISBN 0-471-88998-9), p. 23 for the local field correction.

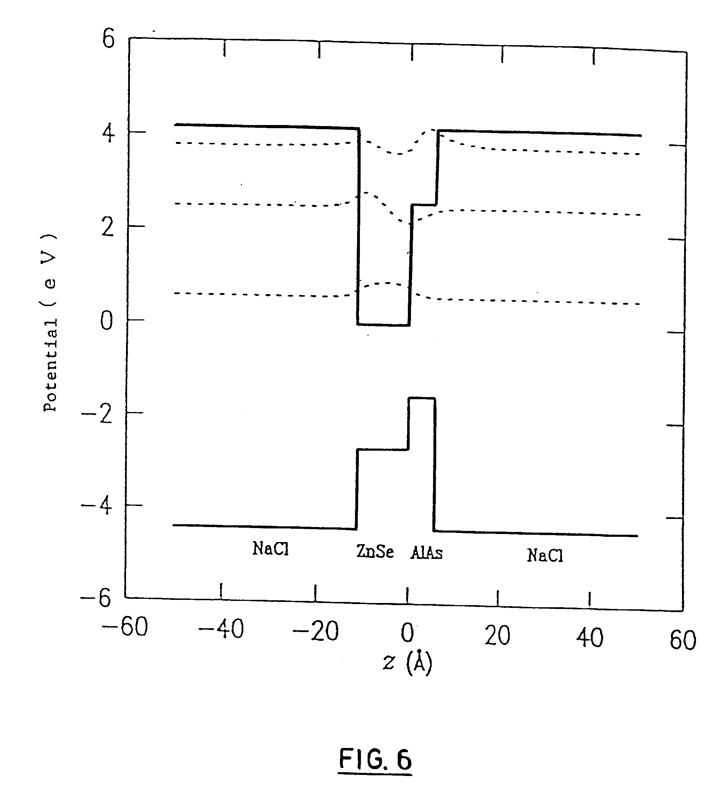

Figure 6 is graph of the potential characteristic of an example of a step-depth well structure using NaCl as the barrier layer and ZnSe and AlAs as the well layers. The step-depth structure introduces potential asymmetry. Of the well layers, the ZnSe layer has a thickness of 11.3 angstroms, while the AlAs layer has a thickness of 5.66 angstroms. The barrier layer has a band-gap of 8.5 eV, and the conduction layer has a depth of 4.2 eV.

The dotted lines show the three possible states (wave functions) of electrons confined in the well. The y-coordinates of the dotted lines indicate the energy levels in those states. They are 0.6 eV, 2.5 eV, and 3.8 eV, measured from the bottom of the well. The difference between the maximum energy level of the electrons in the valence band and the minimum energy level of the electrons in the conduction level is 3.3 eV, even in the ZnSe layer. Thus, low absorption at the visible light level is attained.

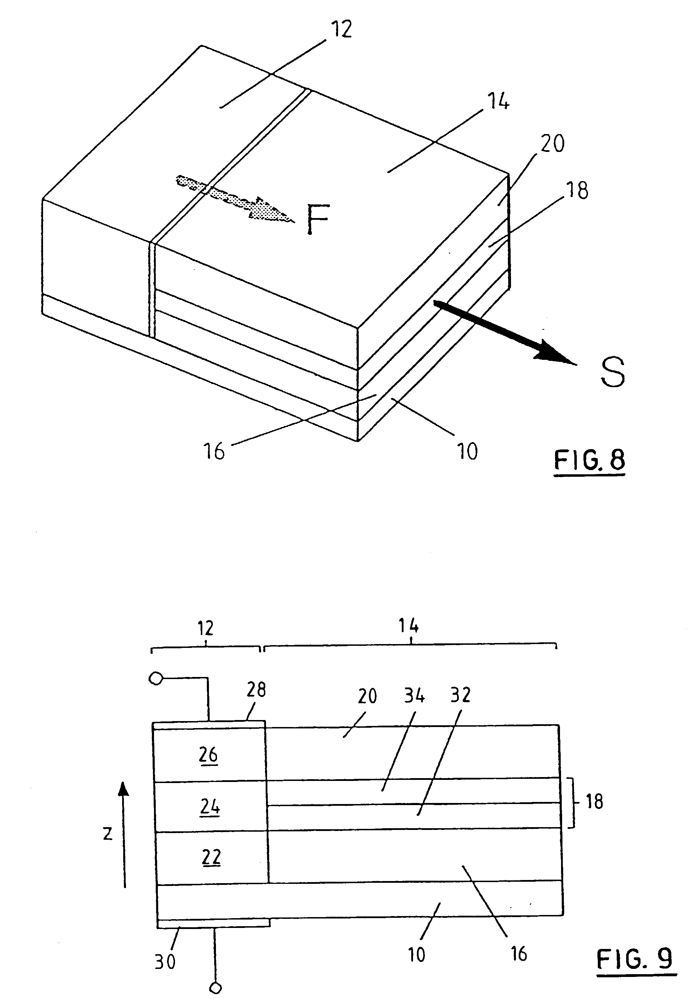

When χ⁽²⁾ is calculated for the multi-quantum-well structure (of which this step-depth quantum well is a unit), under the same conditions as those used for the aforementioned coupled quantum well, the results shown in Figure 7 are obtained. The maximum value of χ⁽²⁾ exceeds 10⁻¹⁰ m/V.

When the wavelength range of the fundamental light wave is near-infrared or red, χ⁽²⁾ for inorganic nonlinear crystals such as KDP is about 10⁻¹¹ m/V. Therefore, the above two examples have a sufficiently strong nonlinearity to generate light of shorter wavelengths.

Figure 8 shows a fundamental structure of a compact coherent blue light generator according to this invention. A semiconductor laser 12 emitting red or near-infrared light and a wavelength converter (second-harmonic frequency wave generator) 14 are formed on a semiconductor substrate 10 doped with impurities. The fundamental light wave F is emitted from the semiconductor laser 12 and falls on the wavelength converter 14, which then outputs the second harmonic S. The wavelength converter 14 has a waveguide structure that satisfies phase matching conditions, that is, one in which the fundamental light wave F and the second harmonic S are caused to have substantially the same refractive index in a waveguide layer 18. A multi-quantum-well structure is contained in the waveguide layer 18. The waveguide layer 18 is sandwiched between clad layers 16 and 20. The clad layers 16 and 20 are made of a material whose refractive index is lower than that of the waveguide layer 18. The length of one side of the entire device shown in Figure 8 can be kept at several millimeters or less. It may be possible to mount a holding stand (not shown) to protect the substrate 10 and to facilitate heat radiation from it. In addition, it may be possible to house all the elements shown in Figure 4 and the holding stand in an enclosure (not shown).

Figure 9 shows an example structure of a coherent light generator in detail. The semiconductor laser 12 is a known GaAs laser that contains an AlGaAs layer 22, a GaAs layer 24, an AlGaAs layer 26, and an Au electrode layer 28 formed on one surface of the GaAs substrate 10, as well as an Au electrode layer 30 formed on the other surface of the substrate 10. The semiconductor laser 12 has a waveguide structure, from whose waveguide layer 24 a coherent beam with a wavelength of 830 nm is emitted. The output beam is polarized in the z-direction (TM mode).

The wavelength converter 14 of the waveguide structure is formed at a position adjacent to the semiconductor laser 12. The design of the waveguide structure is described, for example, in (6) G. I. Stegeman and R. H. Stolen, J. Opt. Soc. Am. B, 6, 652 (1989). Here, the material of the clad layers 16 and 20 is CaF₂. A combination of a multi-quantum-well (hereinafter abbreviated to "MQW") layer 32 and a MgO layer 34 is used as the waveguide layer 18. A fundamental light wave with a wavelength of 830 nm is propagated in the TM0 mode, while the second harmonic, with a wavelength of 415 nm, is propagated in the TM1 mode. The waveguide layer 18 is composed of the MQW layer 32 with high nonlinearity and the MgO layer 34 with low nonlinearity, to ensure the efficiency of wavelength conversion between TM0 and TM1. The positions of the MQW layer 32 and the MgO layer 34 may be reversed vertically.

The MQW layer 32 has a thickness of 234 nm, and includes eighty-two of the units shown in Figure 4. The thickness ratio of the well layer to the barrier layer is 1 : 1, and therefore the repetition cycle is 28.3 angstroms.

The phase matching conditions is achieved by giving the clad layers 16 and 20 a thickness of 1000 nm or more, and the MQW layer 32 and the MgO layer 34 a thickness of 234 nm. When a set of the refractive index of light at 830 nm (n1) and the refractive index of light at 415 nm (n2) is denoted as (n1, n2), the CaF₂ layers 16 and 20 have (1.43, 1.44), the MQW layer 32 (1.92, 2.06), and the MgO layer (1.73, 1.76).

Here is shown a case in which the wave guidelayer consists of a dual layer, and the phase is matched between the TM0 mode and TM1 mode. It is also possible to achieve phase matching by other methods such as by inverting the potential structure of the well layer with respect to the z-direction cyclically in the direction of the light. This method, called quasi-phase-matching, is discussed in (7) F. A. Hoph and G. I. Stegeman, "Applied Classical Electrodynamics," Vol. 2, Wiley-Interscience, New York, (ISBN 0 471 82787-8), pp. 52-54. In this case, the waveguide layer may consist of a single layer of the MQW.

As shown in Figures 4 and 5, the MQW layer 32 has high second-order nonlinearity, and does not absorb light at visible or longer wavelengths. Therefore, the coherent beam emitted from the semiconductor laser 12 is efficiently converted into blue light with one half of its normal wavelength.

The method for manufacturing the device shown in Figure 9 is briefly explained. Any deposition process, such as vacuum evaporation, may be employed for the layers 16, 20, and the MgO layer 34 of the waveguide layer 18. Vacuum evaporation may also be applied to the electrode layers 28 and 30. The molecular beam epitaxy (MBE) process, the metal organic chemical vapor deposition (MOCVD) process, or the liquid phase epitaxy (LPE) process is employed for the layers 22, 24, 26, and the MQW layer 32 of the waveguide layer, because it is necessary to epitaxially grow insulator layers and semiconductor layers alternately.

The manufacturing procedure may be summarized as follows: The layers 22, 24, and 26 are epitaxially grown on the substrate 10 and then removed in part, and the layers 16, 18, and 20 of the wavelength converter 14 are sequentially formed. Alternatively, it may be possible to first produce the wavelength converter 14, a part of which is then etched to form the semiconductor laser 12 later.

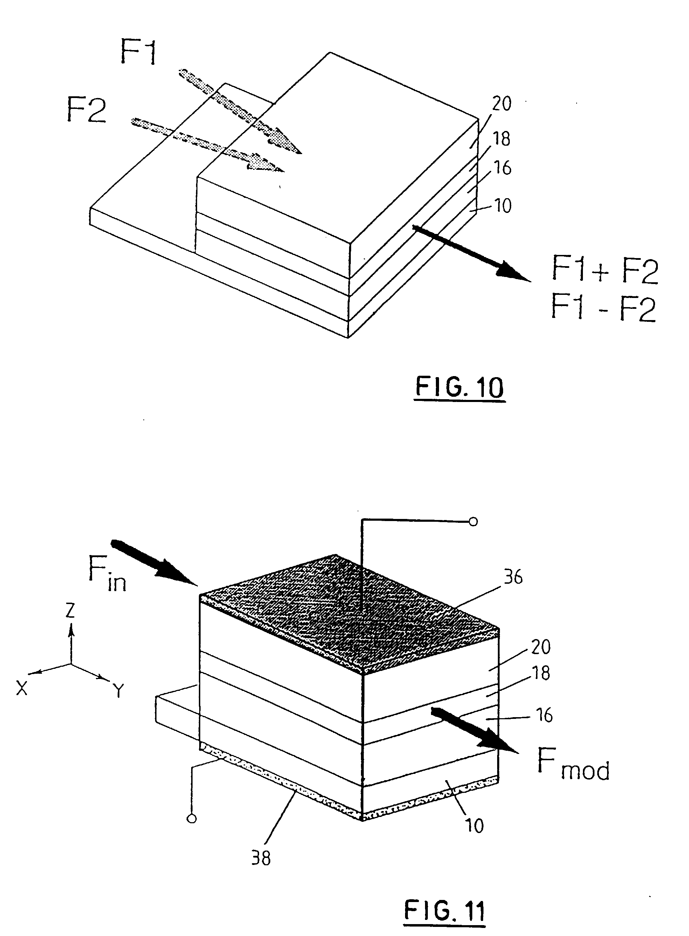

Figure 10 shows a fundamental structure of the nonlinear optical device according to this invention. The nonlinear optical device is the coherent beam generator from which the semiconductor laser 12 is removed. The clad layer 16, the waveguide layer 18 including the MQW layer, and the clad layer 20, are also deposited on the substrate 10 in this structure, although it is not necessary to provide conductivity to the substrate 10.

In a case where this device is used as a sum or difference frequency generator, two fundamental light waves with different wavelengths and therefore with different frequencies (F1, F2) are input to the wave guide layer 18 to generate the sum frequency (F1 + F2) or difference frequency (F1 - F2). If the device is manufactured in such a way that the MQW layer has the same structure as layer 32 in Figure 9, the fundamental light wave F1 may be the 830-nm coherent beam output by the GaAs laser, and the fundamental light wave F2 the 680-nm coherent beam output by the InGaAsP laser. A lens or fiber-optic device (not shown) is used to focus the fundamental light wave on the waveguide layer 18. Adjusting the phase matching conditions with the wave-guide structure determines whether the sum frequency or the difference frequency is generated.

Figure 11 shows a case in which the nonlinear optical device according to this invention is used as an optical modulator. This case utilizes the electro-optic effect (Pockels effect) which is an aspect of the non-linear optical effect different from the wavelength conversion. In the device in this example, the clad layer 16, the waveguide layer 18 (including the MQW layer), and another clad layer 20 are laminated onto the substrate 10 to form the waveguide structure. The phase matching conditions need not be considered, because wavelength conversion is not carried out. In addition, in this device, the electrode layers 36 and 38 are deposited on the clad layer 20 and on the opposite side of the substrate 10.

However, when it is intended that the electro-optic effect should be utilized, the waveguide structure is not essential. It is sufficient that the MQW layer should be held between two electrodes 36 and 38 through which light passes. Therefore, the MQW layer may occupy the entire area between the substrate 10 and the electrode layer 36.

When a voltage applied between the electrodes 36 and 38 is varied for the light propagating through this modulator, whose polarization is in the z-direction, both the effective refractive index of the light in the waveguide and the effective path length change, and consequently the phase of the light is modulated. In the figure, Fin indicates input light, and Fmod indicates modulated output light. When the light polarized in the x-direction is mixed further, modulation of the polarization angle becomes possible. Therefore, intensity modulation is made possible if an external polarizer is used with the modulator.

Fine tuning of the phase matching can be attained by utilizing the electro-optic effect when, as shown in Figure 11, electrodes are mounted on and under the wavelength converter 14 shown in Figure 8. This makes it possible to perform correction later, even if the dimension of the wave guide is not very accurate.

The coherent beam with a short wavelength generated by the nonlinear optical device shown in Figure 10, or by the blue light generator shown in Figure 8, has possible applications in various fields. In optical storage, the output light can be directed onto an optical storage medium through an optical system having a lens. This improves the storage density without increasing the size of the optical storage device.

As described above, the nonlinear optical device in this invention has high nonlinearity. In addition, it can efficiently convert near-infrared or red light into blue light. Furthermore, the coherent light generator in this invention is small but can output light with short wavelengths efficiently.

## Claims

1. A nonlinear optical device comprising a substrate (10) and material layers (16, 18, 20) disposed thereon, at least a portion of said material layers comprising a multi-quantum-well structure (32) having semiconductor layers in which the potential for electrons in a direction (Z) normal to said substrate has a dependence on position in that direction which is asymmetric, characterized in that said multi-quantum-well structure comprises alternate insulator layers and semiconductor layers.

2. A nonlinear optical device as claimed in Claim 1 wherein the difference between the minimum energy levels of the semiconductor layers and the insulator layers, which difference is known as the well depth, is about 3 eV or more in the conduction band of said multi-quantum-well structure.

3. A nonlinear optical device as claimed in Claim 1 or Claim 2 wherein the difference between the minimum energy level of the electrons in the conduction band and the maximum energy level of the electrons in the valence band is about 3 eV or more in the semiconductor layer of said multi-quantum-well structure.

4. A nonlinear optical device according to any one of the preceding claims, which is able to receive input light having a wavelength of 600 nm to 1000 nm, and then to output light having a wavelength of 300 nm to 500 nm.

5. A nonlinear optical device according to any one of the preceding claims, wherein said insulator layers consist of a I-VII compound or a II-VII compound.

6. A nonlinear optical device according to any one of the preceding claims, wherein said semiconductor layers consist of a II-VI compound or a III-V compound.

7. A nonlinear optical device according to any one of the preceding claims, wherein said material layers include a waveguide layer (18) sandwiched between clad layers (16, 20), said waveguide layer including the multi-quantum-well structure (32).

8. A nonlinear optical device as claimed in Claim 1 wherein said multi-quantum-well structure includes a means for applying voltage in a direction normal to said substrate (10).

9. A light wavelength conversion method wherein a fundamental light wave is input to the waveguide layer of a nonlinear optical device according to Claim 7, and light of the second harmonic frequency of the said fundamental light wave is generated and emitted from said waveguide layer.

10. A light wavelength conversion method wherein two fundamental light waves of different wavelength are input to the waveguide layer of a nonlinear optical device according to Claim 7, and the sum frequency wave or difference frequency wave is generated and emitted from said waveguide layer.

11. A light modulation method wherein, by changing the voltage applied to the multi-quantum-well structure of said nonlinear optical device according to Claim 8, light input to said multi-quantum-well structure is modulated by an electro-optic effect.

12. A coherent light generator comprising a laser device for generating a fundamental light wave, and a nonlinear optical device according to any one of claims 1 to 7, wherein the light output from said laser device is guided to the multi-quantum-well structure of said nonlinear optical device.

13. A coherent light generator comprising:
a semiconductor laser and a wavelength converter,
said wavelength converter having material layers including a waveguide layer (18) sandwiched between clad layers (16,20),
at least a portion of said material layers being alternate insulator layers and semiconductor layers comprising a multi-quantum-well structure, the potential for electrons in said semiconductor layers in a direction normal to said substrate having a dependence on position in that direction which is asymmetric,
the waveguide layer of said wavelength converter being located in optical alignment with the light-emitting region of said semiconductor laser.

14. A coherent light generator as claimed in Claim 13, wherein the output of said semiconductor laser is near-infrared or red light, said wavelength converter converting said output light into blue light.

15. A method for optical recording wherein the coherent light emitted by the device set forth in any one of Claims 1 to 8 or 12 or the generator as claimed in claim 13 or 14 is directed onto an optical recording medium.

## Patentansprüche

1. Eine nichtlineare optische Vorrichtung, die ein Substrat (10) enthält und Materialschichten (16, 18, 20), die darauf aufgebracht sind, wobei wenigstens ein Teil dieser Materialschichten, eine Multi-Quantum-Well-Struktur (32) mit Halbleiterschichten enthält, in denen das Potential für Elektronen, das normal in einer Richtung (Z) zu diesem Substrat verläuft, abhängig von der Position in dieser Richtung ist, welche asymmetrisch ist und dadurch gekennzeichnet wird, daß diese Multi-Quantum-Well-Struktur abwechselnd Isolator- und Halbleiterschichten enthält.

2. Eine nichtlineare optische Vorrichtung wie in Anspruch 1 angemeldet, wobei der Unterschied zwischen dem minimalen Energiepegeln der Halbleiterschichten und der Isolatorschichten, deren Unterschied als Well-Tiefe bekannt ist, etwa 3 eV oder mehr in dem Leitungsband der Multi-Quantum-Well-Struktur beträgt.

3. Eine nichtlineare optische Vorrichtung wie in Anspruch 1 oder Anspruch 2 angemeldet, wobei die Differenz zwischen dem minimalen Energiepegel der Elektronen in dem Leitungsband und dem maximalen Energiepegel der Elektronen in dem Valenzband etwa 3 eV oder mehr in der Halbleiterschicht der Multi-Quantum-Well-Struktur beträgt.

4. Eine nichtlineare optische Vorrichtung gemäß irgendeinem der vorhergehenden Ansprüche, die in der Lage ist, Eingangslicht mit einer Wellenlänge von 600 nm bis 1000 nm zu empfangen und dann das Licht mit einer Wellenlänge von 300 nm bis 500 nm auszugeben.

5. Eine nichtlineare optische Vorrichtung gemäß irgendeinem der vorhergehenden Ansprüche, wobei die Isolatorschichten aus einer I-VII Verbindung oder einer II-VII Verbindung bestehen.

6. Eine nichtlineare optische Vorrichtung gemäß irgendeinem der vorhergehenden Ansprüche, wobei die Halbleiterschichten aus einer II-VI Verbindung oder einer III-V Verbindung bestehen.

7. Eine nichtlineare optische Vorrichtung gemäß irgendeinem der vorhergehenden Ansprüche, wobei diese Materialschichten eine Wellenleiterschicht (18) enthalten, die zwischen den Mantelschichten (16, 20) eingeschlossen ist, wobei die Wellenleiterschicht die Multi-Quantum-Well-Struktur (32) enthält.

8. Eine nichtlineare optische Vorrichtung wie in Anspruch 1 angemeldet, wobei diese Multi-Quantum-Struktur ein Mittel enthält, um Spannung in einer für das Substrat (10) normalen Richtung anzulegen.

9. Ein Verfahren zur Umwandlung der Lichtwellenlänge, wobei eine fundamentale Lichtwelle in die Wellenleiterschicht von einer nichtlinearen optischen Vorrichtung gemäß Anspruch 7 einfließt, und Licht von der zweiten Oberschwingungsfrequenz dieser fundamentalen Lichtwelle generiert und von dieser Wellenleiterschicht emittiert wird.

10. Ein Verfahren zur Umwandlung der Lichtwellenlänge, wobei zwei fundamentale Lichtwellen von unterschiedlicher Wellenlänge in die Wellenleiterschicht von einer nichtlinearen optischen Vorrichtung gemäß Anspruch 7 einfließen, und die Summenfrequenzwelle oder Differenzfrequenzwelle generiert und von dieser Wellenleiterschicht emittiert wird.

11. Ein Lichtmodulationsverfahren, wobei durch Änderung der Spannung, die an die Multi-Quantum-Well-Struktur der nichtlinearen optischen Vorrichtung gemäß Anspruch 8 angelegt wird, der Lichteingang in diese Multi-Quantum-Well-Struktur durch einen elektrooptischen Effekt moduliert wird.

12. Ein kohärenter Lichtgenerator, der eine Lasereinheit enthält, um eine fundamentale Lichtwelle zu generieren und eine nichtlineare optische Einheit gemäß irgendeinem der Ansprüche 1 bis 7, wobei der Lichtausgang aus dieser Lasereinheit in die Multi-Quantum-Well-Struktur von dieser nichtlinearen optischen Vorrichtung geleitet wird.

13. Ein kohärenter Lichtgenerator mit
einem Halbleiterlaser und einem Wellenlängenwandler,
wobei der Wellenlängenwandler Materialschichten enthält, die eine Wellenleiterschicht (18) enthalten, die zwischen den Mantelschichten (16, 20) eingeschlossen ist,
wobei wenigstens ein Teil der Materialschichten, die abwechselnd aus Isolator- und Halbleiterschichten bestehen, eine Multi-Quantum-Well-Struktur enthalten, wobei das Potential für Elektronen in diesen Halbleiterschichten normal in einer Richtung zu diesem Substrat verlaufen, die abhängig von der Position in dieser Richtung sind, die asymmetrisch ist,
wobei sich die Wellenleiterschicht dieses Wellenlängenwandlers in optischer Ausrichtung zu dem lichtemittierenden Bereich dieses Halbleiterlasers befindet.

14. Ein kohärenter Lichtgenerator wie in Anspruch 13 angemeldet, wobei der Ausgang dieses Halbleiterlasers beinahe Infrarotlicht oder rotes Licht hat und der Wellenlängenwandler das Ausgangslicht in blaues Licht umwandelt.

15. Ein Verfahren zur optischen Aufzeichnung, wobei das kohärente Licht, das von der Vorrichtung emittiert wird, die in irgendeinem der Ansprüche 1 bis 8 oder 12 ausgeführt wird oder von dem Generator wie in Anspruch 13 oder 14 angemeldet, auf ein optisches Aufzeichnungsmedium gerichtet wird.

## Revendications

1. Dispositif optique non-linéaire comprenant un substrat (10) et des couches de matériaux (16, 18, 20) disposées sur celui-ci, au moins une partie desdites couches de matériaux comprenant une structure à puits quantiques multiples (32) comportant des couches de semiconducteur dans lesquelles le potentiel des électrons dans une direction (Z) normale audit substrat présente une dépendance vis-à-vis de la position dans cette direction qui est asymétrique, caractérisé en ce que ladite structure à puits quantiques multiples comprend des couches d'isolant et de couches de semiconducteur alternées.

2. Dispositif optique non-linéaire selon la revendication 1, dans lequel la différence entre les niveaux d'énergie minimum des couches de semiconducteur et des couches d'isolant, laquelle différence est connue sous le nom de profondeur de puits, est d'environ 3 eV ou plus dans la bande de conduction de ladite structure à puits quantiques multiples.

3. Dispositif optique non-linéaire selon la revendication 1 ou la revendication 2, dans lequel la différence entre le niveau d'énergie minimum des électrons dans la bande de conduction et le niveau d'énergie maximum des électrons dans la bande de valence est d'environ 3 eV ou plus dans la couche de semiconducteur de ladite structure à puits quantiques multiples.

4. Dispositif optique non-linéaire selon l'une quelconque des revendications précédentes, qui peut recevoir une lumière en entrée présentant une longueur d'onde de 600 nm à 1 000 nm, puis sortir une lumière présentant une longueur d'onde de 300 nm à 500 nm.

5. Dispositif optique non-linéaire selon l'une quelconque des revendications précédentes, dans lequel lesdites couches d'isolant sont constituées d'un composé I-VII ou d'un composé II-VII.

6. Dispositif optique non-linéaire selon l'une quelconque des revendications précédentes, dans lequel lesdites couches de semiconducteur sont constituées d'un composé II-VI ou d'un composé III-V.

7. Dispositif optique non-linéaire selon l'une quelconque des revendications précédentes, dans lequel lesdites couches de matériaux comprennent une couche de guide d'onde (18) prise en sandwich entre les couches de gainage (16, 20), ladite couche de guide d'onde comprenant la structure à puits quantiques multiples (32).

8. Dispositif optique non-linéaire selon la revendication 1, dans lequel ladite structure à puits quantiques multiples comprend un moyen destiné à appliquer une tension dans une direction normale audit substrat (10).

9. Procédé de conversion de longueur d'onde lumineuse dans lequel une onde lumineuse fondamentale est entrée dans la couche de guide d'onde d'un dispositif optique non-linéaire conforme à la revendication 7, et de la lumière de la fréquence de seconde harmonique de ladite onde lumineuse fondamentale est générée et émise à partir de ladite couche de guide d'onde.

10. Procédé de conversion de longueur d'onde lumineuse dans lequel deux ondes lumineuses fondamentales de longueurs d'onde différentes sont entrées dans la couche de guide d'onde d'un dispositif optique non-linéaire conforme à la revendication 7, et l'onde de fréquence somme ou l'onde de fréquence différence est générée et émise à partir de la couche de guide d'onde.

11. Procédé de modulation de lumière, consistant à modifier la tension appliquée à la structure à puits quantiques multiples dudit dispositif optique non-linéaire conforme à la revendication 8, l'entrée de lumière vers ladite structure à puits quantiques multiples étant modulée par un effet électro-optique.

12. Générateur de lumière cohérente comprenant un dispositif à laser destiné à générer une onde lumineuse fondamentale, et un dispositif optique non-linéaire conforme à l'une des revendications 1 à 7, dans lequel la lumière sortie à partir dudit dispositif à laser est guidée vers la structure à puits quantiques multiples dudit dispositif optique non-linéaire.

13. Générateur de lumière cohérente comprenant :
un laser à semiconducteurs et un convertisseur de longueur d'onde,
ledit convertisseur de longueur d'onde comportant des couches de matériaux comprenant une couche de guide d'onde (18) prise en sandwich entre des couches de gainage (16, 20),
au moins une partie desdites couches de matériaux qui sont des couches d'isolant et des couches de semiconducteur alternées, comprenant une structure à puits quantiques multiples, le potentiel des électrons dans lesdites couches de semiconducteur dans une direction normale audit substrat, présentant une dépendance vis-à-vis de la position dans cette direction qui est asymétrique,
la couche de guide d'onde dudit convertisseur de longueur d'onde étant positionnée en alignement optique avec la région d'émission de lumière dudit laser à semiconducteurs.

14. Générateur de lumière cohérente selon la revendication 13, dans lequel la sortie dudit laser à semiconducteurs est de la lumière en infrarouge proche ou de la lumière rouge, ledit convertisseur de longueur d'onde convertissant ladite lumière de sortie en lumière bleue.

15. Procédé d'enregistrement optique dans lequel la lumière cohérente émise par le dispositif présenté dans l'une quelconque des revendications 1 à 8 ou 12, ou le générateur selon la revendication 13 ou la revendication 14, est dirigée sur un support d'enregistrement optique.
